# EUROPÄISCHE PATENTSCHRIFT

(11) **EP 0 468 145 B1**
(45) Veröffentlichungstag und Bekanntmachung des Hinweises auf die Patenterteilung: **10.01.1996**
(21) Anmeldenummer: 91106767.6
(22) Anmeldetag: 26.04.1991
(51) Int. Cl.: G06K 7/06, G06K 13/08

(54) **Vorrichtung zum Lesen und Beschreiben von Wertkarten**
Apparatus for the reading/writing of credit cards
Dispositif de lecture et d'écriture de cartes de crédit

(30) Priorität: 23.07.1990 CH 2437/90
(43) Veröffentlichungstag der Anmeldung: 29.01.1992
(73) Patentinhaber: Landis & Gyr Technology Innovation AG, CH-6301 Zug (CH)
(72) Erfinder: Deneke, Bernd, W-6450 Hanau (DE)
(74) Vertreter: Müller, Hans-Jürgen, Dipl.-Ing.

(56) Entgegenhaltungen:
- EP-A- 0 236 846
- DE-U- 8 907 699
- FR-A- 2 599 530
- FR-A- 2 633 754
- FR-A- 2 638 005

## Beschreibung

Die Erfindung bezieht sich auf eine Vorrichtung zum Lesen und Beschreiben von Wertkarten der im Oberbegriff des Anspruchs 1 genannten Art.

Es ist eine Vorrichtung dieser Art bekannt (DE-OS 3 916 812), bei der eine Kartenaufnahme in einem Gehäuse verschiebbar angeordnet ist. In einer ersten Endstellung kann eine Wertkarte durch einen im Gehäuse angeordneten Einführschlitz in die Kartenaufnahme eingeschoben werden. Durch das manuelle Betätigen eines Drehschiebers wird die Kartenaufnahme in eine zweite Endstellung bewegt. Noch bevor die zweite Endstellung ganz erreicht ist, wird durch den Drehschieber einerseits der Einführschlitz verschlossen und andererseits wird ein Kontaktträger derart bewegt, dass die darauf angeordneten Kontaktelemente mit den Kontaktbahnen der Wertkarte verbunden werden.

Es ist eine weitere Vorrichtung bekannt (DE-OS 3 916 783), bei der in einem Gehäuse eine Schublade angeordnet ist, die von einer ersten Endstellung manuell in eine zweite Endstellung verschiebbar ist. In der ersten Endstellung kann eine Wertkarte in die Schublade eingelegt werden. In der zweiten Endstellung ist die Wertkarte für den Benutzer unerreichbar an eine Lese-und Schreibvorrichtung angeschlossen. Noch bevor die Schublade die zweite Endstellung ganz erreicht hat, wird durch die Schublade ein Kontaktträger derart bewegt, dass die darauf angeordneten Kontaktelemente mit den Kontaktbahnen der Wertkarte verbunden werden.

Der Erfindung liegt die Aufgabe zugrunde, einen Kartenleser für Wertkarten zu schaffen, bei dem betrügerische Manipulationen und die Zerstörung durch Vandalenakte weitgehend verunmöglicht sind und der einfach und kostengünstig aufgebaut sein soll.

Die Erfindung besteht in den im Kennzeichen des Anspruchs 1 angegebenen Merkmalen. Vorteilhafte Ausgestaltungen ergeben sich aus den Unteransprüchen.

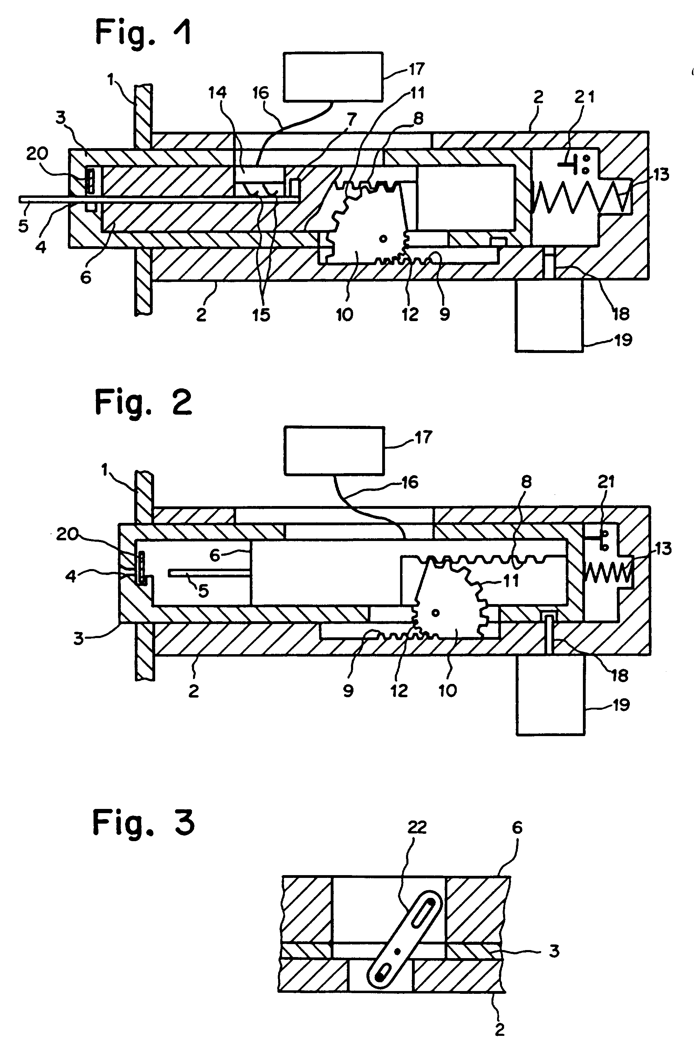

Nachfolgend werden Ausführungsbeispiele der Erfindung anhand der Zeichnung näher erläutert.
- Es zeigen: Fig. 1: eine Seitenansicht der Vorrichtung in der zum Einlegen und Entnehmen von Wertkarten geeigneten Stellung,
- Fig. 2: eine Seitenansicht der Vorrichtung in der Stellung, in der die Wertkarte gelesen und beschrieben werden kann,
- Fig. 3: eine Hebelanordnung,
- Fig. 4: eine Steuerung einer Klappe,
- Fig. 5: eine zweite Steuerung einer Klappe und
- Fig. 6: eine Ausführungsform einer Kontaktierungsvorrichtung.

In den Fig. 1 und 2 bedeutet 1 eine Frontplatte einer Vorrichtung zum Lesen und Beschreiben von Wertkarten. An die Frontplatte 1 schliesst ein Gehäuse 2 an, das als Führung eines Wagens 3 dient, der zwischen einer ersten Endstellung (Fig.1) und einer zweiten Endstellung (Fig. 2) längsverschiebbar ist. Der Vorderteil des Wagens 3 ragt sowohl in der ersten als auch in der zweiten Endstellung aus der Frontplatte 1 heraus. Auf der Stirnseite des Vorderteiles des Wagens 3 ist ein Einführschlitz 4 für Wertkarten 5 angeordnet. Hinter dem Einführschlitz 4 ist eine im Wagen 3 ebenfalls längsverschiebbare Kartenaufnahme 6 zur Aufnahme einer Wertkarte 5 angeordnet, die beispielsweise einen elektronischen Schaltkreis enthält. Die Wertkarte 5 ist in der Kartenaufnahme 6 allseitig geführt, wobei ein Anschlag die Einführtiefe der Wertkarte 5 begrenzt. Eine Klemmvorrichtung 7, beispielsweise eine Feder, hält die Wertkarte 5 mit einer vorbestimmten Kraft in der Kartenaufnahme 6 fest. Ein aus zwei Verzahnungen 11, 12 zusammengesetztes Zahnradsegment 10 ist im Wagen 3 drehbar gelagert. Die eine Verzahnung 11 ist mit einer an der Kartenaufnahme 6 angeordneten ersten Zahnstange 8 und die andere Verzahnung 12 mit einer am Gehäuse 2 angeordneten zweiten Zahnstange 9 im Eingriff. Eine Druckfeder 13 ist zwischen dem Wagen 3 und dem Gehäuse 2 derart angeordnet,dass der Wagen 3 nach vorne, d. h. in der Richtung zur Frontplatte 1, gedrückt wird. Der Weg des Wagens 3 wird durch das Zahnradsegment 10 begrenzt, das sowohl in der ersten wie auch in der zweiten Endstellung anschlägt. In der Kartenaufnahme 6 ist eine Kontaktierungsvorrichtung 14 mit Kontaktfedern 15 angeordnet. Die Kontaktfedern 15 sind mit einem flexiblen Kabel 16, beispielsweise mit einem mehradrigen Bandkabel, mit einem Steuergerät 17 verbunden. Das Steuergerät 17 enthält alle Schaltkreise, die für die Ueberwachung der Vorrichtung und für das Lesen und Beschreiben von Wertkarten 5 notwendig sind. Ein Stössel 18, der in ein im Wagen 3 angeordnetes Loch eingreift und von einem Elektromagneten 19 bewegbar ist, bildet eine Arretierungsvorrichtung, die den Wagen 3 in der zweiten Endstellung festhält. Eine hinter dem Einführschlitz 4 angeordnete Klappe 20 gibt den Einführschlitz 4 in der ersten Endstellung frei und verschliesst ihn in der zweiten Endstellung. Ein vom Wagen 3 gesteuerter Schalter 21 ist in der ersten Endstellung offen und in der zweiten Endstellung geschlossen. Der Schalter 21 ist durch nicht gezeichnete Kabel mit dem Steuergerät 17 verbunden.

In der ersten Endstellung ist die Vorrichtung zur Annahme einer Wertkarte 5 bereit. Der Wagen 3 und die Kartenaufnahme 6 sind ganz nach vorne, d. h. zur Frontplatte 1 hin, verschoben. Die Klappe 20 ist offen, d. h. sie gibt den Einführschlitz 4 frei. Eine Wertkarte 5 kann durch den Einführschlitz 4 in die Kartenaufnahme 6 eingeschoben werden. Noch bevor die Wertkarte 5 vollständig eingeschoben ist, kommt sie mit den Kontaktfedern 15 in Kontakt. Beim weiteren Einschieben der Wertkarte 5 wird die Kartenaufnahme 6 in der Einschubrichtung der Wertkarte 5 mitbewegt. Ueber die Zahnstange 8 und die Verzahnung 11 überträgt sich die lineare Bewegung der Kartenaufnahme 6 in eine Drehbewegung des Zahnradsegmentes 10. Die Verzahnung 12 rollt sich auf der Zahnstange 9 ab. Da das Zahnradsegment 10 im Wagen 3 gelagert ist, bewegt sich der Wagen 3 ebenfalls in der Einschubrichtung der Wertkarte 5 und spannt dabei die Druckfeder 13. Da der Teilkreis der Verzahnung 11 beispielsweise doppelt so gross ist als derjenige der Verzahnung 12, legt die Kartenaufnahme 6, bezogen auf das Gehäuse 2, den dreifachen Weg zurück wie der Wagen 3. Dies hat zur Folge, dass die Wertkarte 5 in den Wagen 3 eingezogen wird. Durch manuellen Druck auf den Wagen 3 wird sowohl dieser als auch die Kartenaufnahme 6 in die Endposition (Fig. 2) bewegt. In der Endposition ist die Klappe 20 geschlossen und verhindert somit jeden Zugriff auf die Wertkarte 5.

Kurz vor dem Erreichen der zweiten Endstellung schliesst der Schalter 21. Das Steuergerät 17 erregt darauf den Elektromagneten 19, der den Stössel 18 so weit anhebt, dass er den Wagen 3 in der zweiten Endstellung festhält, und gibt gleichzeitig einen Lese- und Schreibvorgang frei. Nach der Beendigung des Lese- und Schreibvorganges wird der Elektromagnet 19 vom Steuergerät 17 ausgeschaltet. Damit wird der Wagen 3 freigegeben. Die Druckfeder 13 bewegt den Wagen 3 und damit auch die Kartenaufnahme 6 in die erste Endstellung zurück. Noch bevor die erste Endstellung erreicht ist, öffnet sich die Klappe 20 und die Wertkarte 5 wird aus dem Einführschlitz 4 herausgeschoben. In der ersten Endstellung kann die Wertkarte 5 der Vorrichtung entnommen werden.

Bei der beschriebenen Vorrichtung ist also die Kartenaufnahme 6 verschiebbar in einem verschiebbaren Wagen 3 angeordnet und es sind Mittel angeordnet, die eine Relativbewegung zwischen dem Gehäuse 2 und dem Wagen 3 in eine Relativbewegung zwischen der Kartenaufnahme 6 und dem Wagen 3 derart umsetzen, dass bei manuellem Druck auf den Wagen 3 eine in die Kartenaufnahme 6 eingeführte Wertkarte 5 in den Wagen 3 eingezogen wird.

Eine solche Vorrichtung bietet den Vorteil, dass die Wertkarte 5 in das Innere der Vorrichtung gezogen wird, ohne dass dazu motorische Mittel notwendig sind. Sie ist somit dem Benutzer während dem Lese- und Schreibvorgang entzogen. Ein versehentliches oder auch gewolltes Herausziehen der Wertkarte 5 während des Lese- und Schreibvorganges ist nicht möglich.

Als zusätzlicher Schutz gegen betrügerische Manipulationen kann der Einführschlitz durch die Klappe 20 verschlossen werden. Sowohl die Wertkarte 5 wie auch die Kontaktierungsvorrichtung 14 sind damit während des Lese- und Schreibvorganges für den Benutzer unzugänglich. Manipulationen in betrügerischer Absicht an der Wertkarte 5 oder an der Kontaktierungsvorrichtung 14 werden auf diese Art und Weise verunmöglicht.

Sind das Gehäuse 2, der Wagen 3 und die Kartenaufnahme 6 nach unten offen ausgestaltet, so werden eingeführte Fremdkörper, die nicht dem Format der Wertkarte 5 entsprechen, nach unten ausgegeben. Damit ist ein Verstopfen der Vorrichtung erschwert.

Mit der Druckfeder 13 ist ein Energiespeicher angeordnet, der beim manuellen Einschieben der Kartenaufnahme 6 von der ersten Endstellung in die zweite Endstellung geladen wird und der nach der Freigabe der Kartenaufnahme 6 durch den Stössel 18 die Kartenaufnahme 6 von der zweiten Endstellung selbsttätig in die erste Endstellung zurückbewegt, ohne dass dazu ein Hilfsantrieb notwendig wäre.

Die Vorrichtung ist ausserdem robust aufgebaut, besteht aus wenigen Bestandteilen, benötigt keinen Antriebsmotor und ist dementsprechend kostengünstig. Sie ist universell verwendbar, d. h. anstelle der Kontaktierungsvorrichtung 14 kann auch eine entsprechende Lese- und Schreibvorrichtung für optisch oder magnetisch codierte Wertkarten eingesetzt werden.

Durch die Wahl der Teilkreisdurchmesser der Verzahnungen 11, 12 kann der Weg, den der Wagen 3 und die Kartenaufnahme 6 von der ersten Endstellung zur zweiten Endstellung zurücklegen, beliebig gewählt werden. Bei gleichem Teilkreisdurchmesser bewegt sich die Kartenaufnahme 6 doppelt so weit wie der Wagen 3, bezogen auf das Gehäuse 2.

Das Zahnradsegment 10 kann sowohl senkrecht wie auch waagrecht zur Kartenebene angeordnet sein. Besonders im zweiten Fall ist eine speziell platzsparende Anordnung möglich.

Anstelle des Zahnradsegmentes 10 sind auch andere Mittel einsetzbar, um die Bewegung der Kartenaufnahme 6 in eine Bewegung des Wagens 3 umzusetzen.

Die Fig. 3 zeigt einen im Wagen 3 drehbar gelagerten Hebel 22. Die beiden ungleich langen Arme des Hebels 22 weisen je einen Schlitz auf. Ein in der Kartenaufnahme 6 angeordneter erster Mitnehmerstift greift in den Schlitz des längeren Armes und ein im Gehäuse 2 angeordneter zweiter Mitnehmerstift greift in den Schlitz des kürzeren Armes des Hebels 22 ein.

Die Mitnehmerstifte sind also mit dem Hebel 22 derart im Eingriff, dass jede Bewegung der Kartenaufnahme 6 auf den Wagen 3 und umgekehrt übertragen wird. Durch die Wahl der Länge der beiden Arme des Hebels 22 kann der Verschiebeweg beliebig gewählt werden.

Eine solche Anordnung ist besonders einfach und kostengünstig.

Es ist auch.möglich, den Hebel 22 statt im Wagen 3 im Gehäuse 2 oder in der Kartenaufnahme 6 zu lagern. Es kann aber auch auf eine feste Lagerstelle verzichtet werden und der Hebel 22 mit drei Schlitzen ausgebildet werden, in die je ein im Gehäuse 1, im Wagen 3 und in der Kartenaufnahme 6 angeordneter Mitnehmerstift eingreift. Die Funktion der Anordnung bleibt sich in allen Fällen gleich.

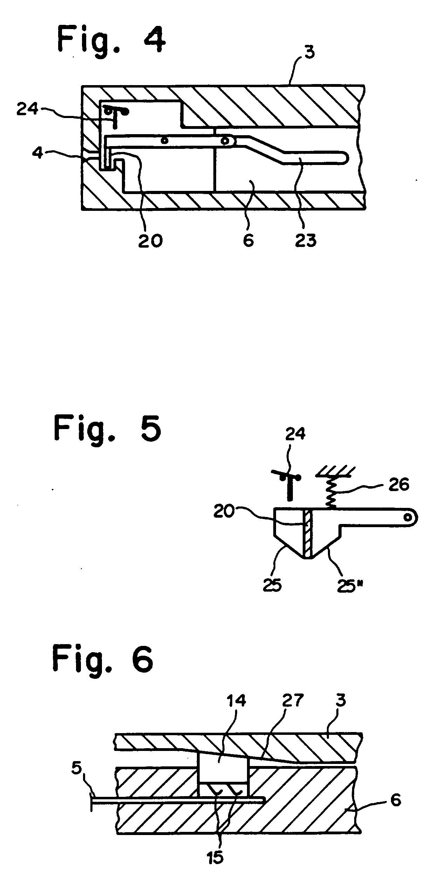

In der Fig. 4 ist die Klappe 20 als U-förmiger Bügel ausgebildet, dessen beiden Arme in der Mitte je einen Zapfen tragen, die im Wagen 3 drehbar gelagert sind. Die Enden der beiden Arme sind als Mitnehmer ausgebildet, die in zwei in den Seitenwänden der Kartenaufnahme 6 angeordneten Nuten 23 eingreifen. Die Nuten 23 sind aus drei Teilen zusammengesetzt. Zwei Teile verlaufen in der Bewegungsrichtung der Kartenaufnahme 6 und ein Verbindungsteil ist geneigt dazu angeordnet. Ein Schalter 24 ist derart angeordnet, dass er geschlossen ist, wenn die Klappe 20 den Einführschlitz 4 verschliesst. Er ist mit nicht gezeichneten Kabeln mit dem Steuergerät 17 verbunden und mit dem Schalter 21 in einer UND-Funktion verknüpft.

Die Klappe 20 wird durch die Nuten 23 zwangsgeführt. In der ersten Endstellung der Kartenaufnahme 6 gibt die Klappe 20 den Einführschlitz 4 frei, in der zweiten Endstellung verschliesst die Klappe 20 den Einführschlitz 4.

Ist eine Wertkarte 5 durch Drähte oder dergleichen verlängert, dann wird dadurch die Klappe 20 blockiert. Der Schalter 24 bleibt offen. Der Elektromagnet 19 wird nicht erregt und somit wird der Wagen 3 in der zweiten Endstellung nicht festgehalten. Ausserdem wird der Lese- und Schreibvorgang nicht freigegeben.

Betrugsversuche durch mit Drähten oder anderen Mitteln verlängerte Wertkarten 5 werden somit zuverlässig verhindert. Es können weitere Schalter angeordnet sein, die beispielsweise die korrekte Lage der Wertkarte 5 überwachen. Auch diese weiteren Schalter sind mit einer UND-Funktion mit den beiden Schaltern 21, 24 verknüpft.

Bei einer alternativen Ausführungsform gemäss der Fig. 5 ist die Klappe 20 als U-förmiger Bügel ausgebildet, dessen beide Arme mit den Enden im Wagen 3 drehbar gelagert sind. Die Klappe 20 ist mit einer vorderen und einer hinteren Anlaufschräge 25', 25" für die Vorder- und die Hinterkante der Wertkarte 5 ausgebildet. Eine Feder 26 drückt die Klappe 20 nach unten, so dass der Einführschlitz 4 verschlossen ist. Der Schalter 24 überwacht die Stellung der Klappe 20.

Beim Einführen einer Wertkarte 5 in den Einführschlitz 4 drückt die Vorderkante der Wertkarte 5 auf die vordere Anlaufschräge 25' der Klappe 20. Der Winkel der Anlaufschräge 25' ist so gewählt, dass die Klappe 20 durch den Druck der Wertkarte 5 geöffnet wird. Nach dem vollständigen Einführen der Wertkarte 5 in die Vorrichtung schliesst die Klappe 20. Falls die Wertkarte 5 durch Drähte oder dergleichen verlängert worden ist, kann die Klappe 20 nicht vollständig schliessen. Der Schalter 24 zur Ueberwachung der Klappe 20 bleibt somit offen und die Steuereinrichtung 17 blockiert den Schreib- und Lesevorgang.

Beim Ausgeben der Wertkarte 5 drückt die Hinterkante der Wertkarte 5 auf die hintere Anlaufschräge 25" der Klappe 20, die dadurch geöffnet wird. Nach dem Herausnehmen der Wertkarte 5 aus der Vorrichtung schliesst die Klappe 20 wieder.

Die beiden Anlaufschrägen 25', 25" sind also derart ausgebildet, dass der Druck der Vorderkante bzw. der Hinterkante der Wertkarte 5 auf die jeweilige Anlaufschräge 25', 25" die Klappe 20 öffnet.

Bei dieser Lösung ist vorteilhafterweise der Einführschlitz 4 auch in der ersten Endstellung verschlossen. Das Eindringen von Staub in die Vorrichtung und damit verbundene Störungen werden somit vermieden.

In der Fig. 6 ist die Kontaktierungsvorrichtung 14 in einer Aussparung der Kartenaufnahme 6 derart eingelegt, dass sie in der Bewegungsrichtung der Kartenaufnahme 6 von dieser mitgenommen wird, in senkrechter Richtung zur Bewegungsrichtung aber verschiebbar ist. Die Kontaktierungsvorrichtung 14 wird von einer nicht gezeichneten Feder gegen eine im Wagen 3 angeordnete geneigte Fläche 27 gepresst, die so ausgebildet ist, dass die Kontaktierungsvorrichtung 14 in der ersten Endstellung von der Wertkarte 5 abgehoben und in der zweiten Endstellung mit der Wertkarte 5 in Verbindung ist.

Beim Verschieben der Kartenaufnahme 6 von der ersten in die zweite Endstellung gleitet die Kontaktierungsvorrichtung 14 entlang der geneigten Fläche 27. Sie wird entgegen der Federkraft gegen die Wertkarte 5 bewegt. Kurz bevor die zweite Endstellung erreicht ist, setzen die Kontaktfedern 15 auf den Kontaktflächen der Wertkarte 5 auf.

Dadurch, dass die Kontaktfedern 15 erst kurz vor dem Erreichen der zweiten Endstellung mit den Kontaktflächen der Wertkarte 5 in Berührung kommen, werden sowohl die Kontaktfedern 15 als auch die Kontaktflächen auf der Wertkarte 5 geschont. Damit wird die Lebensdauer sowohl der Vorrichtung als auch der Wertkarte 5 verlängert. Dadurch, dass die Kontaktfedern 15 nicht über die Wertkarte 5 gleiten, wird auch ein Zerkratzen der Wertkarte 5 vermieden.

Als vorteilhafte Weiterbildung können die Kontaktfedern 15 als schräggeneigte Blattfedern ausgebildet sein, die nach der ersten Berührung mit der Wertkarte 5 durchgebogen werden und dabei eine Relativbewegung zur Wertkarte 5 machen. Schmutzteile auf der Kontaktierungsfläche der Wertkarte 5 werden dadurch zur Seite geschoben und allfällige Oxydschichten auf der Kontaktierungsfläche werden aufgebrochen. Eine sichere Kontaktierung ist damit möglich.

Bei einer vorteilhaften Weiterbildung ist auch die Klemmvorrichtung 7 für die Wertkarten 5 in die Kontaktierungsvorrichtung 14 integriert, und zwar derart, dass die Wertkarte 5 erst während dem Verschieben von der ersten in die zweite Endstellung geklemmt wird.

In der ersten Endstellung ist dann eine Wertkarte 5 in die Vorrichtung einschieb- oder entnehmbar, ohne dass eine Klemmkraft der Klemmvorrichtung 7 überwunden werden muss.

Die beschriebene Vorrichtung zum Lesen und Beschreiben von Wertkarten bietet einige Vorteile. Sie ist vom Benutzer einfach zu bedienen. Das Einführen der Wertkarte 5 in die Kartenaufnahme 6 und das Verschieben derselben von der ersten Endstellung in die zweite Endstellung geschieht im gleichen Bewegungsablauf, also sozusagen automatisch. Die Wertkarten 5 sind während dem Lese- und Schreibvorgang dem Benutzer unzugänglich. Betrugsversuche werden somit erschwert. Die Kontaktierungsvorrichtung 14 ist so ausgebildet, dass sowohl die Kontaktfedern 15 als auch die Wertkarte 5 geschont werden.

Ein Lese- und Schreibvorgang wird erst dann freigegeben, wenn verschiedene Bedingungen erfüllt sind. Nach der Beendigung des Lese- und Schreibvorganges wird die Wertkarte 5 automatisch aus dem Einführschlitz 4 ausgegeben, ohne dass dazu ein motorischer Antrieb notwendig wäre. Trotz dieser vorteilhaften Ausbildungen ist die Vorrichtung einfach und robust aufgebaut. Sie ist daher kostengünstig sowohl in der Herstellung als auch im Betrieb.

## Patentansprüche

1. Vorrichtung zum Lesen und Beschreiben von Wertkarten (5), mit einer manuell verschiebbaren Kartenaufnahme (6), die in einem Gehäuse (2) geführt ist und die zwei Endstellungen aufweist, wobei in der ersten Endstellung die Wertkarte (5) in die Kartenaufnahme (6) eingeführt und entnommen werden kann und in der zweiten Endstellung die Wertkarte (5) einerseits für den Benutzer unzugänglich ist und anderererseits durch eine Lese-und Schreibeinrichtung (17) les- und beschreibbar ist, dadurch gekennzeichnet, dass die Kartenaufnahme (6) verschiebbar in einem verschiebbaren Wagen (3) angeordnet ist und dass Mittel (8, 9, 10, 11, 12; 22) angeordnet sind, die eine Relativbewegung zwischen dem Gehäuse (2) und dem Wagen (3) in eine Relativbewegung zwischen der Kartenaufnahme (6) und dem Wagen (3) derart umsetzen, dass bei manuellem Druck auf den Wagen (3) eine in die Kartenaufnahme (6) eingeführte Wertkarte (5) von der kastenaufnahme (6) in den Wagen (3) eingezogen wird.

2. Vorrichtung nach Anspruch 1, dadurch gekennzeichnet, dass das Mittel ein aus zwei Verzahnungen (11, 12) zusammengesetztes Zahnradsegment (10) ist, welches im Wagen (3) drehbar gelagert ist, und dass die eine Verzahnung (11) mit einer an der Kartenaufnahme (6) angeordneten ersten Zahnstange (8) und die andere Verzahnung (12) mit einer am Gehäuse (2) angeordneten zweiten Zahnstange (9) im Eingriff steht.

3. Vorrichtung nach Anspruch 1, dadurch gekennzeichnet, dass das Mittel ein Hebel (22) ist, der drehbar gelagert ist, und dass Mitnehmer angeordnet sind, die mit dem Hebel (22) derart im Eingriff sind, dass jede Bewegung der Kartenaufnahme (6) auf den Wagen (3) und umgekehrt übertragen wird.

4. Vorrichtung nach einem der vorhergehenden Ansprüche, dadurch gekennzeichnet, dass eine Klappe (20) als U-förmiger Bügel ausgebildet ist, dessen beiden Arme im Wagen (3) drehbar gelagert sind, und dass die Enden der beiden Arme als Mitnehmer ausgebildet sind, die in zwei in der Kartenaufnahme (6) angeordnete Nuten (23) eingreifen, die derart ausgebildet sind, dass die Klappe (20) in der ersten Endstellung einen Einführschlitz (4) freigibt und ihn in der zweiten Endstellung verschliesst.

5. Vorrichtung nach einem der Ansprüche 1 bis 3, dadurch gekennzeichnet, dass eine Klappe (20) als U-förmiger Bügel ausgebildet ist, dessen beiden Arme im Wagen (3) drehbar gelagert sind, und dass an der Klappe (20) eine vordere und eine hintere Anlaufschräge (25', 25") angeordnet sind, die derart ausgebildet sind, dass der Druck der Vorderkante bzw. der Hinterkante der Wertkarte (5) auf die jeweilige Anlaufschräge (25', 25") die Klappe (20) öffnet.

6. Vorrichtung nach einem der vorhergehenden Ansprüche, dadurch gekennzeichnet, dass eine Arretierungsvorrichtung (18, 19) angeordnet ist, die den Wagen (3) in der zweiten Endstellung festhält.

7. Vorrichtung nach Anspruch 6, dadurch gekennzeichnet, dass die Arretierungsvorrichtung aus einem Stössel (18) besteht, der in ein im Wagen (3) angeordnetes Loch eingreift und von einem Elektromagneten (19) bewegbar ist.

8. Vorrichtung nach Anspruch 6 oder 7, dadurch gekennzeichnet, dass ein Energiespeicher (13) angeordnet ist, der beim manuellen Einschieben der Kartenaufnahme (6) von der ersten Endstellung in die zweite Endstellung geladen wird und nach der Freigabe der Kartenaufnahme (6) durch die Arretierungsvorrichtung (18, 19) die Kartenaufnahme (6) von der zweiten Endstellung selbsttätig in die erste Endstellung zurückbewegt.

9. Vorrichtung nach einem der vorhergehenden Ansprüche, dadurch gekennzeichnet, dass eine Kontaktierungsvorrichtung (14) in der Kartenaufnahme (6) derart geführt ist, dass sie in der Bewegungsrichtung der Kartenaufnahme (6) von dieser mitgenommen wird, in senkrechter Richtung zur Bewegungsrichtung aber verschiebbar ist, und dass die Kontaktierungsvorrichtung (14) durch Federkraft gegen eine geneigte Fläche (27) gepresst wird, die so ausgebildet ist, dass die Kontaktierungsvorrichtung (14) in der ersten Endstellung von der Wertkarte (5) abgehoben und in der zweiten Endstellung mit der Wertkarte (5) in Verbindung ist.

10. Vorrichtung nach Anspruch 9, dadurch gekennzeichnet, dass eine Klemmvorrichtung (7) für die Wertkarte (5) in die Kontaktierungsvorrichtung (14) integriert ist.

## Claims

1. Device for reading and writing of credit cards (5), with a manually displaceable card receiver (6) which is guided in a housing (2) and which has two end positions, wherein in the first end position the credit card (5) can be inserted into and removed from the card receiver, and in the second end position the credit card (5) is on the one hand inaccessible to the user and on the other hand can be read from and written onto by a reading and writing apparatus (17), characterised in that the card receiver (6) is movably arranged in a moveable carriage (3) and that means (8, 9, 10, 11, 12; 22) are provided which transfer a relative movement between the housing (2) and the carriage (3) into a relative movement between the card receiver (6) and the carriage (3) so that when there is manual pressure on the carriage (3) a credit card (5) inserted in the card receiver (6) is drawn from the card receiver (6) into the carriage (3).

2. Device according to claim 1, characterised in that the means is a toothed wheel segment (10) composed of two gearings (11, 12) which is rotatably mounted in the carriage (3) and that one of the gearings (11) engages with a first gear rack (8) arranged on the card receiver (6) and the other gearing (12) with a second gear rack (9) arranged on the housing (2).

3. Device according to claim 1, characterised in that the means is a lever (22) which is rotatably mounted, and that catches are provided which engage with the lever (22) such that each movement of the card receiver (6) is transferred to the carriage (3) and vice-versa.

4. Device according to one of the previous claims, characterised in that a flap (20) is configured as a U-shaped clip, the two arms of which are rotatably mounted in the carriage (3) and that the ends of the two arms are configured as catches which engage with two grooves (23) arranged in the card receiver (6), which are configured such that the flap (20) opens an insertion slit in the first end position, and closes it in the second end position.

5. Device according to one of claims 1 to 3, characterised in that a flap (20) is configured as a U-shaped clip, the two arms of which are rotatably mounted in the carriage (3), and that a front and a rear inclined stop face (25', 25") are arranged on the flap (20) which are configured such that the pressure of the front edge or respectively of the back edge of the credit card (5) on the respective inclined stop face (25', 25") opens the flap (20).

6. Device according to one of the preceding claims, characterised in that a detent device (18, 19) is provided which holds the carriage (3) in the second end position.

7. Device according to claim 6, characterised in that the detent device is composed of a plunger (18) which engages in a hole arranged in the carriage (3) and is moveable by means of an electromagnet (19).

8. Device according to claim 6 or 7, characterised in that an energy store (13) is provided, which when the card receiver (6) is manually displaced from the first end position into the second end position is charged and after the release of the card receiver (6) by means of the detent device (18, 19) automatically moves the card receiver (6) from the second end position back into the first end position.

9. Device according to one of the preceding claims, characterised in that a contacting device (14) is guided in the card receiver (6) such that it is carried along by the card receiver (6) in the direction of movement thereof, but is displaceable in a direction perpendicular to the direction of movement, and that the contacting device (14) is pressed by spring force against an inclined surface (27) which is configured such that in the first end position the contacting device (14) is lifted off the credit card (5) and in the second end position it is in contact with the credit card (5).

10. Device according to claim 9, characterised in that a clamping device (7) for the credit card (5) is integrated into the contacting device (14).

## Revendications

1. Dispositif pour réaliser une lecture et un enregistrement sur des cartes de crédit (5), comportant un logement à carte (6) pouvant être déplacé manuellement et qui est guidé dans un boîtier (2) et comporte deux positions d'extrémité, et dans lequel, dans la première position d'extrémité, la carte de crédit (5) peut être insérée dans le logement à carte (6) et en être retirée et, dans la seconde position d'extrémité, d'une part la carte de crédit (5) est inaccessible à l'utilisateur et d'autre part une lecture et un enregistrement peuvent être exécutés sur la carte par un dispositif de lecture et d'enregistrement (17), caractérisé en ce que le logement à carte (6) est disposé de manière à être déplaçable dans un chariot mobile (3) et qu'il est prévu des moyens (8,9,10,11,12; 22), qui convertissent un déplacement relatif entre le boîtier (2) et le chariot (3) en un déplacement relatif entre le logement à carte (6) et le chariot (3) de telle sorte que, dans le cas où une poussée est appliquée manuellement au chariot (3), une carte de crédit (5) insérée dans le logement à carte (6) est introduite par le logement à carte (6) dans le chariot (3).

2. Dispositif selon la revendication 1, caractérisé en ce que les moyens sont constitués par un segment denté (10) formé par la réunion de deux dentures (11,12) et qui est monté de manière à pouvoir tourner dans le chariot (3), et qu'une denture (11) engrène avec une première crémaillère (8) disposée sur le logement à carte (6) et que l'autre denture (6) engrène avec une seconde crémaillère (9) disposée sur le boîtier (2).

3. Dispositif selon la revendication 1, caractérisé en ce que les moyens sont constitués par un levier (22), qui est monté rotatif et qu'il est prévu des organes d'entraînement, qui engrènent avec le levier (22) de telle sorte que chaque déplacement du logement à carte (6) est transmis au chariot (3) et inversement.

4. Dispositif selon l'une des revendications précédentes, caractérisé en ce qu'un volet (20) est réalisé sous la forme d'un étrier en forme de U, dont les deux bras sont montés de manière à pouvoir pivoter dans le chariot (3), et que les extrémités des deux bras sont agencées sous la forme d'organes d'entraînement, qui s'engagent dans deux rainures (23) aménagées dans le logement à carte (6) et qui sont agencées de telle sorte que, dans la première position d'extrémité, le volet (20) libère une fente d'introduction (4) et, dans la seconde position d'extrémité, ferme cette fente.

5. Dispositif selon l'une des revendications 1 à 3, caractérisé en ce qu'un volet (20) est réalisé sous la forme d'un étrier en forme de U, dont les deux bras sont montés rotatifs dans le chariot (3) et que sur le volet (20) sont disposées des rampes avant et arrière (25', 25") qui sont agencées de telle sorte que la pression du bord avant ou du bord arrière de la carte de crédit (5) sur la rampe respective (25',25") ouvre le volet (20).

6. Dispositif selon l'une des revendications précédentes, caractérisé en ce qu'il est prévu un dispositif de blocage (18,19), qui maintient fermement le chariot (3) dans la seconde position d'extrémité.

7. Dispositif selon la revendication 6, caractérisé en ce que le dispositif de blocage est constitué par un poussoir (18), qui s'engage dans un trou aménagé dans le chariot (3) et peut être déplacé par un électroaimant (19).

8. Dispositif selon la revendication 6 ou 7, caractérisé en ce qu'il est prévu un accumulateur d'énergie (13), qui est chargé lors de l'insertion manuelle du logement de carte (6) de la première position d'extrémité dans la seconde position d'extrémité et qui, après libération du logement à carte (6) par le dispositif de blocage (18,19), ramène automatiquement le logement à carte (6) de la seconde position d'extrémité dans la première position d'extrémité.

9. Dispositif selon l'une des revendications précédentes, caractérisé en ce qu'un dispositif de contact (14) est guidé dans le logement à carte (6) de telle sorte qu'il est entraîné conjointement par le logement à carte (6) dans la direction de déplacement de ce dernier, mais est déplaçable dans une direction perpendiculaire à la direction de déplacement, et que le dispositif de contact (14) est repoussé par la force d'un ressort contre une surface inclinée (27) agencée de telle sorte que dans la première position d'extrémité, le dispositif de contact (14) est écarté de la carte de crédit (5) et, dans la seconde position d'extrémité, est réuni à la carte de crédit (5).

10. Dispositif selon la revendication 9, caractérisé en ce qu'un dispositif de serrage (7) pour la carte de crédit (5) est intégré dans le dispositif de contact (14).
